# EUROPÄISCHE PATENTSCHRIFT

(11) **EP 1 198 794 B1**
(45) Veröffentlichungstag und Bekanntmachung des Hinweises auf die Patenterteilung: **16.04.2003**
(21) Anmeldenummer: 00936782.2
(22) Anmeldetag: 23.05.2000
(51) Int. Cl.: G11B 7/00, G11B 9/00

(54) **DATENSPEICHER UND VERFAHREN ZUM SCHREIBEN VON INFORMATION IN EINEN DATENSPEICHER**
DATA MEMORY AND METHOD FOR WRITING INFORMATION IN A DATA MEMORY
MEMOIRE DE DONNEES ET PROCEDE D'INSCRIPTION D'INFORMATIONS DANS UNE MEMOIRE DE DONNEES

(30) Priorität: 26.07.1999 DE 19935775
(43) Veröffentlichungstag der Anmeldung: 24.04.2002
(73) Patentinhaber: Tesa AG, 20253 Hamburg (DE)
(72) Erfinder: LEIBER, Jörn, D-22529 Hamburg (DE); MÜSSIG, Bernhard, D-21218 Seevetal (DE); STADLER, Stefan, D-22359 Hamburg (DE)
(74) Vertreter: Both, Georg
(86) Internationale Anmeldenummer: EP0004667
(87) Internationale Veröffentlichungsnummer: WO01008141

(56) Entgegenhaltungen:
- EP-A- 0 352 194
- WO-A-00/17864
- US-A- 5 289 407

## Beschreibung

Die Erfindung betrifft ein Verfahren zum Schreiben von Information in einen Datenspeicher mit einem optischen Informationsträger sowie einen Datenspeicher.

In der DE 298 16 802 ist ein Datenspeicher mit einem optischen Informationsträger beschrieben, der einen Polymerträger in Form einer Polymerfolie enthält. Als Material für die Polymerfolie werden Polymethylmethacrylat sowie ein von der Beiersdorf AG unter der Bezeichnung "Tesafilm kristallklar" vertriebener Polymerfilm genannt, der biaxial orientiertes Polypropylen aufweist. Bei diesem Datenspeicher ist die Polymerfolie in mehreren Lagen spiralartig auf einen Wickelkern aufgewickelt, wobei sich zwischen benachbarten Lagen jeweils eine Adhäsionsschicht befindet. In den Datenspeicher lassen sich Informationen einschreiben, indem die Polymerfolie mit Hilfe eines Schreibstrahls eines Datenlaufwerks lokal erwärmt wird. Die bei der Folienherstellung im Polypropylen durch biaxiale Verstreckung gespeicherte Energie wird nämlich bei der lokalen Erwärmung durch den Schreibstrahl (kurze Laserpulse) wieder freigegeben, wobei sich das Polymerfolienmaterial lokal zusammenzieht und daher an den dem Schreibstrahl ausgesetzten Stellen seine Brechzahl ändert. Dies führt zu einer lokalen Änderung des Reflexionsvermögens (der Reflektivität) an der Grenzfläche der Polymerfolie, was mit Hilfe eines Lesestrahls in dem Datenlaufwerk erfaßt werden kann. Durch Fokussieren des Schreibstrahls oder Lesestrahls läßt sich Information gezielt in eine vorgewählte Lage des Informationsträgers einschreiben bzw. daraus auslesen. Der Wickelkern kann optisch transparent sein und in seinem Zentrum eine Aussparung aufweisen, die zum Aufnehmen der Schreib- und Leseeinrichtung eines Datenlaufwerks dient. Dabei wird die Schreib- und Leseeinrichtung relativ zu dem Datenspeicher bewegt, während der Datenspeicher ruht, so daß der Datenspeicher nicht im Hinblick auf eine schnelle Rotationsbewegung ausgewuchtet zu sein braucht.

Um die Leistung des Schreibstrahls effektiv in Wärme umzuwandeln und auf diese Weise eine lokale Änderung der Brechzahl in der Größenordnung von 0,2 zu erzielen, die für das Speichern von Information ausreichend ist, wird bei dem vorbekannten Datenspeicher ein Absorber eingesetzt, der in der Adhäsionsschicht enthalten ist. Der Absorber ist jedoch nachteilig, da er auch den Lesestrahl abschwächt. Dies wirkt sich insbesondere bei mehrlagigen Systemen wie dem vorbekannten Datenspeicher störend aus. Zudem ist es wünschenswert, daß die erzielbare Änderung der Brechzahl noch größer ist, um von dem Lesestrahl ein stärkeres Signal zu erhalten.

Es ist Aufgabe der Erfindung, für einen Datenspeicher mit einem optischen Informationsträger, der einen Polymerträger aufweist, verbesserte Möglichkeiten zu schaffen.

Diese Aufgabe wird gelöst durch ein Verfahren zum Schreiben von Information in einen Datenspeicher mit einem optischen Informationsträger mit den Merkmalen des Anspruchs 1 sowie durch Datenspeicher mit den Merkmalen der Ansprüche 11 und 12. Vorteilhafte Ausgestaltungen der Erfindung ergeben sich aus den abhängigen Ansprüchen.

Das erfindungsgemäße Verfahren dient zum Schreiben von Information in einen Datenspeicher mit einem optischen Informationsträger, der einen Polymerträger aufweist. Dabei werden an einzelnen Informationseinheiten zugeordneten Stellen des Polymerträgers in Abhängigkeit von der einzugebenden Information brechzahländernde Atome und/oder Moleküle in den Polymerträger eingebracht.

Die brechzahländernden Atome und/oder Moleküle, die sich in dem für das Speichern einer Informationseinheit vorgesehenen Bereich des Polymerträgers befinden, bewirken eine Änderung der Brechzahl. Die Folge davon ist eine lokale Änderung des Reflexionsvermögens (der Reflektivität) an der Grenzfläche oder den Grenzflächen des Polymerträgers zu einem benachbarten Medium. Dies kann mit Hilfe eines Lesestrahls erfaßt werden, der an der betrachteten Stelle in Abhängigkeit von der eingegebenen Information, also dem lokalen Gehalt an brechzahländernden Atomen und/oder Molekülen, reflektiert wird. Durch das Einbringen der brechzahländernden Atome und/oder Moleküle in den Polymerträger können die optischen Eigenschaften des Polymerträgers effektiv und in definierter Weise verändert werden. So lassen sich zum Beispiel lokale Brechzahländerungen in der Größenordnung von 0,2 und mehr erzielen, was für das Auslesen der eingegebenen Daten zum Beispiel mit Hilfe eines Lesestrahls ausreicht. Als Polymerträger eignet sich zum Beispiel eine Polymerfolie (Polymerfilm).

In dem Polymerträger werden die Informationseinheiten durch Änderung der optischen Eigenschaften in einem Bereich mit einer bevorzugten Größe von weniger als 1 µm ausgebildet. Dabei kann die Information binär gespeichert werden, d.h. die lokale Reflektivität nimmt an der Stelle einer Informationseinheit nur zwei Werte an. Anders ausgedrückt, wenn die Reflektivität oberhalb eines festgelegten Schwellenwerts liegt, ist an der betrachteten Stelle des Informationsträgers zum Beispiel eine "1" gespeichert, und wenn sie unterhalb dieses Schwellenwerts oder unterhalb eines anderes, niedrigeren Schwellenwerts liegt, entsprechend eine "0". Es ist aber auch denkbar, die Information in mehreren Graustufen abzuspeichern. Dies ist möglich, wenn sich die optischen Eigenschaften des Polymerträgers an der Stelle einer Informationseinheit durch definiertes Einstellen der Brechzahl auf gezielte Weise verändern lassen, ohne daß dabei eine Sättigung erreicht wird.

Bei einer vorteilhaften Ausgestaltung des erfindungsgemäßen Verfahrens werden die brechzahländernden Atome und/oder Moleküle in den Polymerträger eindiffundiert, und zwar vorzugsweise durch lokale Erwärmung. Dabei können die brechzahländernden Atome und/oder Moleküle einer Schicht entstammen, die auf dem Polymerträger aufgetragen ist. Um die brechzahländernden Atome und/oder Moleküle an der Stelle einer Informationseinheit in den Polymerträger einzubringen, wird dabei die Schicht oder der daran angrenzende Polymerträger in dem betreffenden Bereich erwärmt, so daß die brechzahländernden Atome und/oder Moleküle aus der Schicht herauswandern und in den Polymerträger eindiffundieren können. Da aus Nachbarbereichen, die nicht erwärmt werden, keine brechzahländernden Atome und/oder Moleküle in den Polymerträger eindiffundieren, kann in dem Polymerträger auf diese Weise eine räumliche Verteilung brechzahländernder Atome und/oder Moleküle angeordnet werden, die dem Muster der einzugebenden Information entspricht.

Wenn die restliche Schicht, aus der die brechzahländernden Atome und/oder Moleküle stammen, nach dem Eingeben der Information von dem Polymerträger entfernt wird, sind die von einem Lesestrahl erfaßten Signale besonders deutlich, da sich die brechzahländernden Atome und/oder Moleküle praktisch alle in dem Polymerträger befinden. Von brechzahländernden Atomen und/oder Molekülen in der restlichen Schicht kann also kein störender Einfluß ausgehen.

Nachdem die restliche Schicht entfernt ist, kann in den Datenspeicher aber keine neue oder weitere Information geschrieben werden. Es ist aber nicht zwingend notwendig, nach dem Eingeben von Information die restliche Schicht von dem Polymerträger zu entfernen. Denn die brechzahländernden Atome und/oder Moleküle haben in der molekularen Umgebung des Polymerträgers andere optische Eigenschaften als in der Schicht, in der sie in der Regel in höherer Konzentration und je nach Ausführungsform in einer Matrix gelagert sind. Eine Rolle spielt auch die der Grenzfläche zwischen dem Polymerträger und der Schicht gegenüberliegende Grenzfläche des Polymerträgers, deren Reflektivität vorwiegend durch die in den Polymerträger eindiffundierten brechzahländernden Atome und/oder Moleküle beeinflußt wird und nicht von der auf der anderen Seite des Polymerträgers befindlichen restlichen Schicht.

Eine andere Möglichkeit, die brechzahländernden Atome und/oder Moleküle in den Polymerträger einzubringen, besteht darin, sie mittels Teilchenstrahlen in den Polymerträger zu implantieren.

Die einzugebende Information kann zum Beispiel mittels eines fokussierten Schreibstrahls eingegeben werden. Als Schreibstrahl läßt sich zum Beispiel ein fokussierter Laserstrahl verwenden, der eine auf den Polymerträger aufgetragene Schicht mit brechzahländernden Atomen und/oder Molekülen lokal erwärmt, so daß brechzahländernde Atome und/oder Moleküle von dort aus in den Polymerträger eindiffundieren. Auch ein Teilchenstrahl bei einem Implantationsverfahren läßt sich als Schreibstrahl anwenden.

Eine andere Möglichkeit zum Beschreiben des Polymerträgers besteht darin, die einzugebende Information großflächig unter Verwendung einer Maske einzugeben. In diesem Fall kann der Polymerträger hinter einer Maske plaziert werden, die mit einem Muster gemäß der einzugebenden Information versehen ist. Vor der Maske befindet sich eine Quelle, zum Beispiel eine Wärmestrahlungsquelle oder eine Lichtquelle, deren Strahlung entsprechend dem Muster der Maske zu dem Polymerträger oder einer Schicht mit brechzahländernden Atomen und/oder Molekülen auf dem Polymerträger durchdringt, oder eine Quelle für Teilchenstrahlung, um brechzahländernde Atome und/oder Moleküle entsprechend dem Muster der Maske in den Polymerträger zu implantieren.

Bei einer vorteilhaften Ausgestaltung des erfindungsgemäßen Verfahrens wird die einzugebende Information durch Bestrahlung mit infrarotem Licht eingegeben, z.B. unter Verwendung eines Schreibstrahls oder einer Maske, wie bereits erwähnt. Das auf den Bereich für die Speicherung einer Informationseinheit gerichtete infrarote Licht (Wärmestrahlung) bewirkt eine lokale Erwärmung, die zu einer Diffusion von brechzahländernden Atomen und/oder Molekülen in den Polymerträger führt. Besonders geeignet ist infrarotes Licht im Wellenlängenbereich um 1,5 µm, denn das Material des Polymerträgers (z.B. Polypropylen, siehe unten) weist dort nämlich in der Regel eine relativ starke Absorption auf, was durch Oberschwingungen der C-H-Streckschwingung bedingt ist.

Als brechzahländernde Atome und/oder Moleküle ist eine Vielzahl verschiedener Atome und/oder Moleküle denkbar. Die Auswahl richtet sich zum Beispiel nach der Verträglichkeit mit dem Polymerträger, nach der Größe des zu erzielenden Effekts (d.h. der gewünschten Änderung der Brechzahl), den optischen Eigenschaften im spektralen Bereich des zum Lesen der Information verwendeten Lesestrahls, usw.

Besonders vorteilhaft ist es, als brechzahländernde Atome und/oder Moleküle stark polarisierbare Moleküle zu verwenden. Sie haben eine relativ große Brechzahl und beeinflussen daher die optischen Eigenschaften des Polymerträgers relativ stark, wenn sie dort eingebracht sind.

Als stark polarisierbare Moleküle besonders geeignet sind halogenhaltige Moleküle. So erhöhen Chlor und Brom mit ihrer großen Polarisierbarkeit die Brechzahl. Als halogenhaltige Materialien für eine auf den Polymerträger aufgetragene Schicht mit brechzahländernden Molekülen kommen insbesondere Harze und Oligomere in Frage. Gerade im Bereich der Acrylate existiert eine Vielzahl von kommerziell erhältlichen, teilweise oder vollständig halogenisierten Monomeren.

Auch aromatische Moleküle lassen sich als stark polarisierbare Moleküle verwenden. Die Brechzahl bei Kohlenwasserstoffen kann über die Aromatizität eingestellt werden; Aromaten besitzen deutlich höhere Brechzahlen als gesättigte Kohlenwasserstoffe. Besonders große Effekte lassen sich mit halogenhaltigen aromatischen Molekülen erzielen.

Eine andere Möglichkeit besteht darin, als brechzahländernde Atome und/oder Moleküle gering polarisierbare Moleküle zu verwenden, d.h. Moleküle, die im Vergleich zu dem Polymerträger eine niedrige Polarisierbarkeit und daher eine kleine Brechzahl haben. Denn auch solche Moleküle zeigen eine verhältnismäßig starke Wirkung auf die optischen Eigenschaften des Polymerträgers, wenn sie dort zur Speicherung von Information eingebracht sind. So nimmt zum Beispiel die Brechzahl eines Mediums ab, wenn darin Wasserstoff durch Fluor ersetzt wird.

Das erfindungsgemäße Verfahren zum Schreiben von Information in einen Datenspeicher läßt sich in besonders vorteilhafter Weise in Verbindung mit zwei Arten von Datenspeichern ausführen.

Eine Art des erfindungsgemäßen Datenspeichers hat einen optischen Informationsträger mit bereits eingegebener Information, der einen Polymerträger aufweist. Dabei enthält der Polymerträger an einzelnen Informationseinheiten zugeordneten Stellen in Abhängigkeit von der eingegebenen Information brechzahländernde Atome und/oder Moleküle. Der Datenspeicher kann vom Hersteller in einer der oben erläuterten Weisen beschrieben werden. Falls dabei die brechzahländernden Atome und/oder Moleküle aus einer auf dem Polymerträger aufgetragenen Schicht in den Polymerträger eindiffundiert wurden und anschließend diese Schicht entfernt wurde, kann vom Benutzer keine neue oder weitere Information in den Datenspeicher eingegeben werden, zumindest nicht gemäß dem erfindungsgemäßen Verfahren.

Die zweite Art des erfindungsgemäßen Datenspeichers hat einen optischen Informationsträger, der einen Polymerträger aufweist, wobei der Polymerträger mit einer Schicht versehen ist, die brechzahländernde Atome und/oder Moleküle enthält. Diese sind durch lokale Erwärmung in den Polymerträger eindiffundierbar. Ein derartiger Datenspeicher kann also vom Benutzer beschrieben werden; die Daten oder ein Teil der Daten kann aber auch bereits vom Hersteller eingegeben worden sein.

Die brechzahländernden Atome und/oder Moleküle weisen vorzugsweise stark polarisierbare Moleküle, wie zum Beispiel halogenhaltige Moleküle oder aromatische Moleküle, oder auch gering polarisierbare Moleküle auf, wie oben erläutert.

Wenn der Polymerträger mit einer Schicht versehen ist, die brechzahländernde Atome und/oder Moleküle enthält, ist bei einer bevorzugten Ausgestaltung der Schicht ein Absorber zugeordnet, der dazu eingerichtet ist, einen Schreibstrahl zumindest teilweise zu absorbieren und die dabei erzeugte Wärme zumindest teilweise lokal an die Schicht und/oder den Polymerträger abzugeben. Der Absorber kann zum Beispiel in der Schicht, im Polymerträger oder in einer dem Polymerträger benachbarten Adhäsionsschicht enthalten sein. Er erleichtert die Absorption eines Schreibstrahls und damit die für die Diffusion der brechzahländernden Atome und/oder Moleküle erforderliche lokale Erwärmung. Alternativ (oder auch zusätzlich) kann die Erwärmung auch durch Bestrahlung mit infrarotem Licht, z.B. im Wellenlängenbereich um 1,5 µm erfolgen, wie bereits erläutert. Ein Polymerträger wie z.B. aus Polypropylen weist dort nämlich - bedingt durch Oberschwingungen der C-H-Streckschwingung - eine relativ starke Absorption auf. Damit kann gegegenenfalls auf einen zusätzlichen Absorber verzichtet werden.

Vorzugsweise weist der Informationsträger mehrere Polymerträgerlagen auf, durch die hindurch Informationseinheiten aus einer vorgewählten Polymerträgerlage auslesbar und gegebenenfalls in eine vorgewählte Polymerträgerlage schreibbar sind. Zwischen benachbarten Polymerträgerlagen kann jeweils eine Adhäsionsschicht angeordnet sein, um die Polymerträgerlagen untereinander zu fixieren. Als Adhäsionsmittel eignet sich zum Beispiel ein luftblasenfreier Acrylatkleber, der z.B. chemisch oder durch UV- bzw. Elektronenstrahlung vernetzt wird. Wenn die Brechzahl der Adhäsionsschicht nur geringfügig von der Brechzahl des Polymerträgers abweicht, werden störende Reflexionen eines Lesestrahls oder Schreibstrahls an einer Grenzschicht zwischen einer Polymerträgerlage und einer benachbarten Adhäsionsschicht minimiert. Besonders vorteilhaft ist es, wenn der Unterschied der Brechzahlen kleiner als 0,005 ist. Ein bestehender Unterschied der Brechzahlen kann jedoch zum Formatieren des Datenspeichers genutzt werden. Es ist denkbar, daß eine brechzahländernde Atome und/oder Moleküle enthaltende Schicht (siehe oben) adhäsive Eigenschaften aufweist, so daß eine zusätzliche Adhäsionsschicht entfallen kann.

Als Polymerträger kann Plattenmaterial verwendet werden. Der Polymerträger kann aber auch eine Polymerfolie aufweisen, zum Beispiel aus biaxial orientiertem Polypropylen (BOPP). Wenn als Polymerträger eine Polymerfolie eingesetzt wird, ist bei einer bevorzugten Ausführungsform der Informationsträger spiralartig aufgewickelt, wobei zwischen benachbarten Polymerfolienlagen vorzugsweise jeweils eine Adhäsionsschicht vorgesehen ist. So können zum Beispiel 10 bis 30 Polymerfolienlagen aufgewickelt sein, aber auch mehr oder weniger. Bei einer Dicke der Polymerfolie zwischen 10 µm und 100 µm, vorzugsweise unter 50 µm oder um 35 µm, läßt sich die Information auf unterschiedlichen Polymerfolienlagen mit Hilfe von zum Beispiel aus der DVD-Technologie bekannten Lese- und Schreibeinrichtungen gut auflösbar voneinander trennen. Eine Adhäsionsschicht kann zum Beispiel eine Dicke im Bereich zwischen 1 µm und 40 µm haben, vorzugsweise unter 25 µm oder um 2 µm.

Der Datenspeicher mit spiralartig aufgewickeltem Informationsträger hat vorzugsweise einen optisch transparenten Wickelkern, der in seinem Zentralbereich eine Aussparung aufweist. In diesem Fall ist es möglich, in der Aussparung im Zentralbereich des Wickelkerns eine Leseeinrichtung und optional eine Schreibeinrichtung eines auf den Datenspeicher abgestimmten Laufwerks anzuordnen und zum Lesen bzw. zum Schreiben von Information relativ zu dem Datenspeicher zu bewegen, während der Datenspeicher ruht. Ein ruhender Datenspeicher hat den Vorteil, daß er nicht ausgewuchtet sein muß, um hohe Rotationsgeschwindigkeiten zu ermöglichen, was sich günstig auf die Herstellungskosten auswirkt.

Im folgenden wird die Erfindung anhand von Ausführungsbeispielen näher beschrieben. Die Zeichnungen zeigen in
- Figur 1: in den Teilen (a), (b) und (c) schematische Darstellungen verschiedener Schritte bei der Durchführung des erfindungsgemäßen Verfahrens zum Schreiben von Information in einen Datenspeicher mit einem optischen Informationsträger und
- Figur 2: einen erfindungsgemäßen Datenspeicher, der einen spiralartig auf einen Wickelkern aufgewickelten Informationsträger aufweist, in schematischer perspektivischer Darstellung, wobei innerhalb des Wickelkerns Teile eines auf den Datenspeicher abgestimmten Laufwerks angeordnet sind.

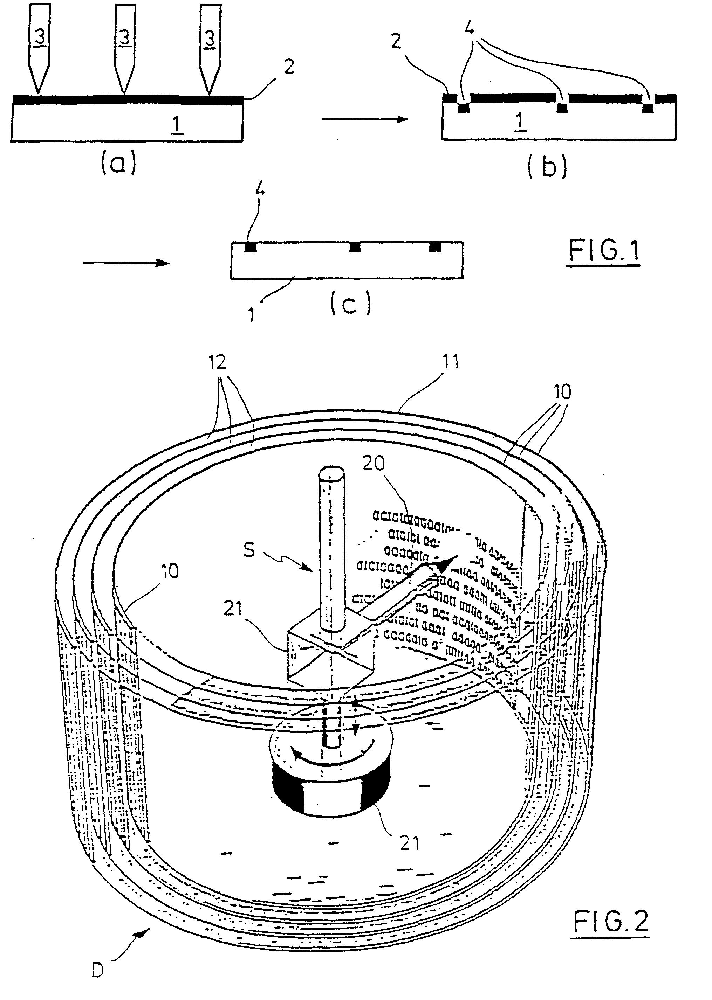

In Figur 1 sind verschiedene Schritte eines Ausführungsbeispiels für ein Verfahren zum Schreiben von Information in einen Datenspeicher mit einem optischen Informationsträger veranschaulicht.

Der optische Informationsträger weist einen Polymerträger 1 auf, der als Polymerfolie gestaltet sein kann. Auf dem Polymerträger 1 ist eine dünne Schicht 2 aufgetragen, die brechzahländernde Atome und/oder Moleküle enthält. Dabei können die brechzahländernden Atome und/oder Moleküle die gesamte Schicht 2 ausmachen, sie können aber auch in eine Matrix aus einem Trägermaterial eingebettet sein.

Figur 1(a) zeigt, wie die Schicht 2 mit dem darunterliegenden Polymerträger 1 an drei verschiedenen Stellen mit Hilfe eines als Schreibstrahl dienenden fokussierten Laserstrahls 3 lokal erwärmt wird. Dabei entspricht die Größe eines erwärmten Bereichs ungefähr der Größe, die zum Speichern einer Informationseinheit vorgesehen ist. Typischerweise hat der Fokus des Schreibstrahls 3 eine Größe (je nach geometrischer Form des Fokus zum Beispiel Durchmesser oder Seitenlänge) von ca. 1 µm oder darunter. Um die Erwärmung an den drei in Figur 1(a) gezeigten Stellen durchzuführen, kann der Schreibstrahl 3 nacheinander auf diese Stellen gerichtet werden. Es ist aber auch eine gleichzeitige Erwärmung aller drei Stellen denkbar, was zum Beispiel durch Verwendung mehrerer Schreibstrahlen, durch Bestrahlung einer Maske oder durch Projektion eines dem gewünschten Erwärmungsmuster entsprechenden Bildes auf die Schicht 2 erreicht werden kann.

Infolge der lokalen Erwärmung diffundieren an den drei betrachteten Stellen brechzahländernde Atome und/oder Moleküle aus der Schicht 2 in den Polymerträger 1, was in Figur 1(b) veranschaulicht ist. Die Stellen des Polymerträgers 1 mit erhöhter Konzentration an brechzahländernden Atomen und/oder Molekülen sind in Figur 1(b) mit 4 bezeichnet. In diesen Bereichen hat der Polymerträger 1 eine veränderte Brechzahl, was zu einer Änderung der Reflektivität an den Grenzschichten des Polymerträgers 1 führt und von einem Lesestrahl in einem auf den Datenspeicher abgestimmten Laufwerk erfaßt werden kann.

Figur 1(c) zeigt als weiteren Schritt des Verfahrens, daß der Rest der Schicht 2 nach dem Eingeben der Information entfernt wird, zum Beispiel mit Hilfe eines Löse- oder Ätzmittels. In diesem Fall können die brechzahländernden Atome und/oder Moleküle nur an den einzelnen Informationseinheiten zugeordneten Stellen des Polymerträgers 1 und nur entsprechend dem eingegebenen Informationsinhalt einen Effekt zeigen, was ein leicht zu erfassendes Lesesignal ermöglicht.

Der in Figur 1(c) veranschaulichte Verfahrensschritt kann aber auch entfallen, so daß die restliche Schicht 2 auf dem Polymerträger 1 verbleibt. Die optischen Eigenschaften des Polymerträgers 1 werden nämlich durch das Eindiffundieren der brechzahländernden Atome und/oder Moleküle an den den Schreibstrahlen 3 ausgesetzten Stellen in ausreichendem Maße verändert, so daß ein Unterschied zu anderen Stellen mit Hilfe einer Leseeinrichtung noch erfaßbar ist. Diese Variante des Verfahrens hat den Vorteil, daß ein Datenspeicher, bei dem die Schicht 2 auf dem Polymerträger 1 verbleibt, auch von einem Benutzer mit Hilfe eines preisgünstigen Datenlaufwerks beschrieben werden kann. Dies gilt auch für den Fall, daß der Datenspeicher mehrere Lagen eines mit einer Schicht 2 versehenen Polymerträgers 1 aufweist, wie unten anhand von Figur 2 näher erläutert.

Als brechzahländernde Atome und/oder Moleküle sind insbesondere stark polarisierbare Moleküle wie halogenhaltige Moleküle, Aromaten oder aromatische halogenhaltige Moleküle geeignet. Infolge der generell großen Polarisierbarkeit ist in diesen Fällen die Brechzahl hoch. Die folgende Tabelle zeigt für einige in flüssiger Form vorliegende Verbindungen die Brechzahl n im Licht der Natrium-D-Linie bei 20 °C.

| Verbindung | n |
|---|---|
| Benzol | 1,504 |
| Fluorbenzol | 1,468 |
| Chlorbenzol | 1,524 |
| Brombenzol | 1,561 |
| 1,2-Difluorbenzol | 1,445 |
| Perfluorbenzol | 1,378 |
| 1,2-Dichlorbenzol | 1,552 |
| 1,2-Dibrombenzol | 1,616 |
| Cyclohexan | 1,427 |
| Fluorcyclohexan | 1,415 |
| Chlorcyclohexan | 1,463 |
| Bromcyclohexan | 1,496 |
| 1,2-cis-Dichlorcyclohexan | 1,497 |
| 1,2-cis-Dibromcyclohexan | 1,551 |

Als halogenhaltige Materialien kommen besonders Harze und Oligomere in Frage. Im Bereich der Acrylate zum Beispiel ist eine Vielfalt von teilweise und vollständig halogenierten Monomeren kommerziell erhältlich.

Es folgen einige Beispiele für Materialien für den Polymerträger 1 und weitere Beispiele für brechzahländernde Moleküle in der Schicht 2.

Der Polymerträger kann eine Polymerfolie aus biaxial orientiertem Polypropylen (BOPP) oder Polyethylenterephtalat (PET) aufweisen. Es sind aber auch Polymerfolien aus nicht verstrecktem Material denkbar, weil das Einbringen der Information auf einem anderen Prinzip beruht, als in der eingangs erwähnten DE 298 16 802 beschrieben ist. So können zum Beispiel Folien aus Polymethylmethacrylat (PMMA), COC (einem von Hoechst vertriebenen cycloolefinischen Copolymer) oder einem von Nippon Zeon unter der Bezeichnung Zeonex vertriebenen Material angewandt werden. Die drei letzteren Materialien sind völlig amorph (sie enthalten also keine Kristallite) und daher sehr transparent. Ein Vorteil von PMMA ist neben einem günstigen Preis die chemische Verwandschaft zu halogenierten Acrylatlacken, die als Schicht mit brechzahländernden Molekülen aufgebracht werden können. COC und Zeonex weisen demgegenüber eine erhöhte Temperaturstabilität auf. So betragen die Glasübergangstemperaturen für PMMA etwa 105 °C, für COC etwa 135 °C und für Zeonex etwa 135 °C.

Als Materialien für die Schicht mit brechzahländernden Atomen und/oder Molekülen sind zum Beispiel chlorierte oder bromierte Methacrylate oder Acrylate vorteilhaft, insbesondere, wenn sie schon etwas anpolymerisiert sind, also als sogenannte Oligomere, z.B. Pentabromphenylacrylat und Pentabromphenylmethacrylat. Letztere Verbindungen enthalten neben dem Brom auch noch eine aromatische Phenylgruppe. Wenn als optischer Effekt zur Informationsspeicherung eine lokale Brechzahlerniedrigung erwünscht ist, können entsprechende fluorierte Methacrylate oder Acrylate eingesetzt werden, z.B. Pentadecafluoroctylacrylat oder Pentadecafluoroctylmethacrylat. Denkbar sind auch Epoxidharze, die z.B. aus 2,2',6,6'-Tetrabrombisphenol A und einer Epoxykomponente, z.B. Epichlorhydrin, gefertigt werden.

Figur 2 zeigt in schematischer Darstellung einen Datenspeicher D und eine Schreib- und Leseeinrichtung S eines auf den Datenspeicher D abgestimmten Laufwerks. Der Datenspeicher D weist eine Anzahl von Lagen 10 einer als Informationsträger dienenden Polymerfolie 11 auf, auf die eine in Figur 2 nicht separat gezeigte Schicht aufgetragen ist, die brechzahländernde Moleküle enthält. Die Polymerfolie 11 mit der genannten Schicht ist spiralartig auf einen optisch transparenten, hülsenförmigen Wickelkern aufgewickelt. Der Wickelkern ist in Figur 2 der Übersichtlichkeit halber nicht dargestellt; er befindet sich innerhalb der innersten Lage 10. Zur besseren Veranschaulichung sind die einzelnen Lagen 10 der Polymerfolie 11 einschließlich der Schicht mit brechzahländernden Molekülen in Figur 2 als konzentrische Kreisringe gezeigt, obwohl die Lagen 10 durch spiralartiges Wickeln der beschichteten Polymerfolie 11 ausgebildet sind. Zwischen benachbarten Lagen 10 der beschichteten Polymerfolie 11 ist jeweils eine Adhäsionsschicht 12 angeordnet. Aus Gründen der Übersichtlichkeit sind die Adhäsionsschichten 12 in Figur 2 in nicht maßstäblich vergrößerter Dicke eingezeichnet.

Die Polymerfolie 11 selbst besteht im Ausführungsbeispiel aus biaxial orientiertem Polypropylen (BOPP) und wurde vor dem Wikkeln in beiden Flächenrichtungen vorgespannt. Im Ausführungsbeispiel hat sie eine Dicke von 35 µm; andere Dicken im Bereich von 10 µm bis 100 µm oder auch außerhalb dieses Bereichs liegende Dicken sind ebenfalls denkbar. Die Schicht mit brechzahländernden Molekülen auf der Polymerfolie 11 hat im Ausführungsbeispiel eine Dicke von 1 µm, wobei auch andere Dicken möglich sind. Sie besteht im Ausführungsbeispiel aus einem chlor- oder bromhaltigen Harz. Die Adhäsionsschichten 12 sind gasblasenfrei und bestehen im Ausführungsbeispiel aus Acrylatkleber, bei einer Dicke von 23 µm, wobei bevorzugte Schichtdicken zwischen 1 µm und 40 µm liegen. (Gegebenenfalls können die Adhäsionsschichten entfallen, wenn die die brechzahländernden Moleküle enthaltende Schicht adhäsive Eigenschaften aufweist.) Im Ausführungsbeispiel hat der Datenspeicher D zwanzig Lagen 10 der beschichteten Polymerfolie 11 und einen Außendurchmesser von etwa 30 mm. Die Höhe des Wickelzylinders beträgt 19 mm. Eine andere Anzahl von Lagen 10 oder andere Abmessungen sind ebenfalls möglich. Die Anzahl der Wicklungen oder Lagen 10 kann zum Beispiel zwischen zehn und dreißig liegen, aber auch größer als dreißig sein.

Die im Innenraum des Wickelkerns angeordnete Schreib- und Leseeinrichtung S enthält einen Schreib- und Lesekopf 20, der mit Hilfe einer Mechanik 21 in den Richtungen der eingezeichneten Pfeile gedreht und axial hin- und herbewegt werden kann. Der Schreib- und Lesekopf 20 weist optische Elemente auf, mit deren Hilfe ein von einem in Figur 2 nicht dargestellten Laser erzeugter Lichtstrahl (zum Beispiel der Wellenlänge 630 nm oder 532 nm) auf die einzelnen Lagen 10 der beschichteten Polymerfolie 11 fokussiert werden kann. Da der Schreib- und Lesekopf 20 mit Hilfe der Mechanik 21 bewegt wird, kann er alle Lagen 10 des Datenspeichers D vollständig abtasten. Im Ausführungsbeispiel ruht dabei der Datenspeicher D. Er braucht also nicht im Hinblick auf eine hohe Rotationsgeschwindigkeit ausgewuchtet zu sein (und muß auch nicht abgewickelt oder umgespult werden), im Gegensatz zu dem Schreib- und Lesekopf 20. Der Übersichtlichkeit halber sind in Figur 2 die zum Auswuchten des Schreib- und Lesekopfs 20 vorgesehenen Elemente nicht gezeigt. Der erwähnte Laser befindet sich außerhalb des Schreib- und Lesekopfs 20 und ist stationär; der Laserstrahl wird über optische Elemente in den Schreib- und Lesekopf 20 gelenkt.

Zum Speichern oder Einschreiben von Information in den Datenspeicher D wird der Laser im Ausführungsbeispiel mit einer Strahlleistung von etwa 1 mW betrieben. Der Laserstrahl dient dabei als Schreibstrahl und wird auf eine vorgewählte Lage 10 der beschichteten Polymerfolie 11 fokussiert, so daß der Strahlfleck kleiner als 1 µm ist, wobei die Lichtenergie in Form kurzer Pulse von etwa 10 µs Dauer eingebracht wird. Die Energie des Schreibstrahls wird in dem Strahlfleck absorbiert, was zu einer lokalen Erwärmung der Polymerfolie 11 und der darauf aufgetragenen Schicht mit brechzahländernden Molekülen und damit zu einer Diffusion der brechzahländernden Moleküle in die Polymerfolie 11 führt. Dadurch ändern sich lokal die Brechzahl und die Reflektivität. Beim Schreibvorgang ist der Schreibstrahl in den zu der betrachteten Lage 10 der beschichteten Polymerfolie 11 benachbarten Lagen defokussiert, so daß die benachbarten Lagen der beschichteten Polymerfolie 11 lokal nur geringfügig erwärmt werden und dort die gespeicherte Information nicht verändert wird.

Um gespeicherte Information aus dem Datenspeicher D auszulesen, wird der Laser im Continuous-Wave-Modus (CW-Modus) betrieben. In Abhängigkeit von der gespeicherten Information wird der auf die gewünschte Stelle fokussierte Lesestrahl reflektiert, und die Intensität des reflektierten Strahls wird von einem Detektor in der Schreib- und Leseeinrichtung S erfaßt.

Der Datenspeicher kann auch von einer Ausführungsform sein, die vom Benutzer nicht beschreibbar ist. In diesem Fall enthält er vom Hersteller eingeschriebene Informationseinheiten. Eine Schreibfunktion im Datenlaufwerk des Benutzers erübrigt sich dann.

## Patentansprüche

1. Verfahren zum Schreiben von Information in einen Datenspeicher (D) mit einem optischen Informationsträger, der einen Polymerträger (1) aufweist, wobei an einzelnen Informationseinheiten zugeordneten Stellen (4) des Polymerträgers (1) in Abhängigkeit von der einzugebenden Information brechzahländernde Atome und/oder Moleküle in den Polymerträger (1) eingebracht werden.

2. Verfahren nach Anspruch 1, **dadurch gekennzeichnet, daß** die brechzahländernden Atome und/oder Moleküle in den Polymerträger (1) eindiffundiert werden, vorzugsweise durch lokale Erwärmung.

3. Verfahren nach Anspruch 2, **dadurch gekennzeichnet, daß** die brechzahländernden Atome und/oder Moleküle einer Schicht (2) entstammen, die auf dem Polymerträger (1) aufgetragen ist.

4. Verfahren nach Anspruch 3, **dadurch gekennzeichnet, daß** die restliche Schicht (2) nach dem Eingeben der Information von dem Polymerträger (1) entfernt wird.

5. Verfahren nach Anspruch 1, **dadurch gekennzeichnet, daß** die brechzahländernden Atome und/oder Moleküle mittels Teilchenstrahlen in den Polymerträger implantiert werden.

6. Verfahren nach einem der Ansprüche 2 bis 4, **dadurch gekennzeichnet, daß** die einzugebende Information durch Bestrahlung mit infrarotem Licht eingegeben wird.

7. Verfahren nach einem der Ansprüche 1 bis 6, **dadurch gekennzeichnet, daß** die einzugebende Information mittels eines fokussierten Schreibstrahls (3) eingegeben wird.

8. Verfahren nach einem der Ansprüche 1 bis 6, **dadurch gekennzeichnet, daß** die einzugebende Information großflächig unter Verwendung einer Maske eingegeben wird.

9. Verfahren nach einem der Ansprüche 1 bis 8, **dadurch gekennzeichnet, daß** als brechzahländernde Atome und/oder Moleküle stark polarisierbare Moleküle verwendet werden.

10. Verfahren nach Anspruch 9, **dadurch gekennzeichnet, daß** als stark polarisierbare Moleküle halogenhaltige Moleküle verwendet werden.

11. Verfahren nach Anspruch 9 oder 10, **dadurch gekennzeichnet, daß** als stark polarisierbare Moleküle aromatische Moleküle verwendet werden.

12. Verfahren nach einem der Ansprüche 1 bis 8, **dadurch gekennzeichnet, daß** als brechzahländernde Atome und/oder Moleküle gering polarisierbare Moleküle verwendet werden.

13. Datenspeicher, mit einem optischen Informationsträger mit eingegebener Information, der einen Polymerträger (1) aufweist, wobei der Polymerträger (1) an einzelnen Informationseinheiten zugeordneten Stellen (4) in Abhängigkeit von der eingegebenen Information brechzahländernde Atome und/oder Moleküle enthält.

14. Datenspeicher, mit einem optischen Informationsträger, der einen Polymerträger (1) aufweist, wobei der Polymerträger (1) mit einer Schicht (2) versehen ist, die brechzahländernde Atome und/oder Moleküle enthält, die durch lokale Erwärmung in den Polymerträger (1) eindiffundierbar sind.

15. Datenspeicher nach Anspruch 13 oder 14, **dadurch gekennzeichnet, daß** die brechzahländernden Atome und/oder Moleküle stark polarisierbare Moleküle aufweisen.

16. Datenspeicher nach Anspruch 15, **dadurch gekennzeichnet, daß** die stark polarisierbaren Moleküle halogenhaltige Moleküle aufweisen.

17. Datenspeicher nach Anspruch 15 oder 16, **dadurch gekennzeichnet, daß** die stark polarisierbaren Moleküle aromatische Moleküle aufweisen.

18. Datenspeicher nach Anspruch 13 oder 14, **dadurch gekennzeichnet, daß** die brechzahländernden Atome und/oder Moleküle gering polarisierbare Moleküle aufweisen.

19. Datenspeicher nach einem der Ansprüche 14 bis 18 in Verbindung mit Anspruch 14, **dadurch gekennzeichnet, daß** der Schicht (2) ein Absorber zugeordnet ist, der dazu eingerichtet ist, einen Schreibstrahl zumindest teilweise zu absorbieren und die dabei erzeugte Wärme zumindest teilweise lokal an die Schicht (2) und/oder den Polymerträger (1) abzugeben.

20. Datenspeicher nach einem der Ansprüche 13 bis 19, **dadurch gekennzeichnet, daß** der Informationsträger mehrere Polymerträgeriagen (10) aufweist, durch die hindurch Informationseinheiten aus einer vorgewählten Polymerträgerlage (10) auslesbar und gegebenenfalls in eine vorgewählte Polymerträgerlage (10) schreibbar sind.

21. Datenspeicher nach Anspruch 20, **dadurch gekennzeichnet, daß** zwischen benachbarten Polymerträgerlagen (10) jeweils eine Adhäsionsschicht (12) angeordnet ist.

22. Datenspeicher nach Anspruch 21, **dadurch gekennzeichnet, daß** die Brechzahl der Adhäsionsschicht (12) nur geringfügig von der Brechzahl des Polymerträgers (11) abweicht.

23. Datenspeicher nach einem der Ansprüche 13 bis 22, **dadurch gekennzeichnet, daß** der Polymerträger eine Polymerfolie (11) aufweist.

24. Datenspeicher nach Anspruch 23, **dadurch gekennzeichnet, daß** der Informationsträger (11) spiralartig aufgewickelt ist.

25. Datenspeicher nach Anspruch 24, **gekennzeichnet durch** einen optisch transparenten Wickelkern, der in seinem Zentralbereich eine Aussparung aufweist.

26. Verwendung eines Datenspeichers nach Anspruch 25 in einem darauf abgestimmten Laufwerk, das eine Leseeinrichtung (S) und optional eine Schreibeinrichtung (S) aufweist, wobei die Leseeinrichtung (S) und die optionale Schreibeinrichtung (S) in der Aussparung im Zentralbereich des Wickelkerns angeordnet sind und zum Lesen bzw. Schreiben von Information relativ zu dem Datenspeicher (D) bewegt werden, während der Datenspeicher (D) ruht.

## Claims

1. Method of writing information in a data storage medium (D) comprising an optical information medium which has a polymer carrier (1), atoms and/or molecules that change the refractive index being introduced into the polymer carrier (1), at individual locations (4) associated with information units, as a function of the information to be entered.

2. Method according to Claim 1, **characterized in that** the atoms and/or molecules that change the refractive index are diffused into the polymer carrier (1), preferably by means of local heating.

3. Method according to Claim 2, **characterized in that** the atoms and/or molecules that change the refractive index originate from a layer (2) which is applied to the polymer carrier (1).

4. Method according to Claim 3, **characterized in that** the rest of the layer (2) is removed from the polymer carrier (1) after the information has been entered.

5. Method according to Claim 1, **characterized in that** the atoms and/or molecules that change the refractive index are implanted into the polymer carrier by means of particle beams.

6. Method according to one of Claims 2 to 4, **characterized in that** the information to be entered is entered by means of irradiation with infrared light.

7. Method according to one of Claims 1 to 6, **characterized in that** the information to be entered is entered by means of a focused write beam (3).

8. Method according to one of Claims 1 to 6, **characterized in that** the information to be entered is entered over the entire area, using a mask.

9. Method according to one of Claims 1 to 8, **characterized in that** highly polarizable molecules are used as the atoms and/or molecules that change the refractive index.

10. Method according to Claim 9, **characterized in that** halogen-containing molecules are used as highly polarizable molecules.

11. Method according to Claim 9 or 10, **characterized in that** aromatic molecules are used as highly polarizable molecules.

12. Method according to one of Claims 1 to 8, **characterized in that** slightly polarizable molecules are used as atoms and/or molecules that change the refractive index.

13. Data storage medium, comprising an optical information medium with entered information, which has a polymer carrier (1), the polymer carrier (1) containing atoms and/or molecules that change the refractive index, at individual locations (4) associated with information units, as a function of the entered information.

14. Data storage medium, comprising an optical information medium, which has a polymer carrier (1), the polymer carrier (1) being provided with a layer (2) which contains atoms and/or molecules that change the refractive index and which can be diffused into the polymer carrier (1) by means of local heating.

15. Data storage medium according to Claim 13 or 14, **characterized in that** the atoms and/or molecules that change the refractive index comprise highly polarizable molecules.

16. Data storage medium according to Claim 15, **characterized in that** the highly polarizable molecules comprise halogen-containing molecules.

17. Data storage medium according to Claim 15 or 16, **characterized in that** the highly polarizable molecules comprise aromatic molecules.

18. Data storage medium according to Claim 13 or 14, **characterized in that** the atoms and/or molecules that change the refractive index comprise slightly polarizable molecules.

19. Data storage medium according to one of Claims 14 to 18 in connection with Claim 14, **characterized in that** the layer (2) is assigned an absorber which is set up to absorb a write beam, at least partially, and to locally discharge the heat produced thereby at least partially to the layer (2) and/or the polymer carrier (1).

20. Data storage medium according to one of Claims 13 to 19, **characterized in that** the information medium has a plurality of polymer carrier plies (10), through which information units can be read from a preselected polymer carrier ply (10) and, if appropriate, can be written to a preselected polymer carrier ply (10).

21. Data storage medium according to Claim 20, **characterized in that** an adhesion layer (12) is in each case arranged between adjacent polymer carrier plies (10).

22. Data storage medium according to Claim 21, **characterized in that** the refractive index of the adhesion layer (12) differs only slightly from the refractive index of the polymer carrier (11).

23. Data storage medium according to one of Claims 13 to 22, **characterized in that** the polymer carrier comprises a polymer film (11).

24. Data storage medium according to Claim 23, **characterized in that** the information medium (11) is wound spirally.

25. Data storage medium according to Claim 24, **characterized by** an optically transparent winding core which has a recess in its central area.

26. Use of a data storage medium according to claim 25 in a drive which is tuned thereto and has a reading device (S) and, optionally, a writing device (S), the reading device (S) and the optional writing device (S) being arranged in the recess in the central area of the winding core, and, in order to read or write information, being moved relative to the data storage medium (D) while the data storage medium (D) is stationary.

## Revendications

1. Procédé pour écrire des informations dans une mémoire (D) de données avec un support optique d'informations qui présente un support(1) en polymère, dans lequel, à des emplacements (4) associés à des unités individuelles d'informations du support(1) en polymère, des atomes et/ou des molécules modifiant l'indice de réfraction sont introduits dans le support(1) en polymère en fonction des informations à enregistrer.

2. Procédé selon la revendication 1, **caractérisé en ce que** les atomes et/ou les molécules modifiant l'indice de réfraction sont introduits dans le support(1) en polymère par diffusion, de préférence par un échauffement local.

3. Procédé selon la revendication 2, **caractérisé en ce que** les atomes et/ou les molécules modifiant l'indice de réfraction proviennent d'une couche (2) qui est déposée sur le support(1) en polymère.

4. Procédé selon la revendication 3, **caractérisé en ce que** la couche (2) restant après l'enregistrement des informations est retirée du support(1) en polymère.

5. Procédé selon la revendication 1, **caractérisé en ce que** les atomes et/ou les molécules modifiant l'indice de réfraction sont implantés dans le support en polymère au moyen d'une radiation de particules.

6. Procédé selon l'une des revendications 2 à 4, **caractérisé en ce que** les informations à enregistrer sont introduites au moyen d'une exposition à des rayons infrarouges.

7. Procédé selon l'une des revendications 1 à 6, **caractérisé en ce que** les informations à enregistrer sont enregistrées au moyen d'une radiation (3) focalisée d'écriture.

8. Procédé selon l'une des revendications 1 à 6, **caractérisé en ce que** les informations à enregistrer sont introduites sur une surface étendue en utilisant un masque.

9. Procédé selon l'une des revendications 1 à 8, **caractérisé en ce que**, comme atomes et/ou molécules modifiant l'indice de réfraction, des molécules pouvant être fortement polarisées sont utilisées.

10. Procédé selon la revendication 9, **caractérisé en ce que** comme molécules pouvant être fortement polarisées on utilise des molécules contenant des halogènes.

11. Procédé selon la revendication 9 ou 10, **caractérisé en ce que** comme molécules pouvant être fortement polarisées on utilise des molécules aromatiques.

12. Procédé selon l'une des revendications 1 à 8, **caractérisé en ce que**, comme atomes et/ou molécules modifiant l'indice de réfraction, des molécules pouvant être faiblement polarisées sont utilisées.

13. Mémoire de données ayant un support optique d'informations avec des informations enregistrées qui comporte un support (1) en polymère, dans laquelle le support (1) en polymère contient, à des emplacements (4) associés à des unités individuelles d'informations, des atomes et/ou des molécules modifiant l'indice de réfraction en fonction des informations enregistrées.

14. Mémoire de données ayant un support optique d'informations avec des informations enregistrées qui comporte un support (1) en polymère, dans laquelle le support (1) en polymère est muni d'une couche (2) qui contient des atomes et/ou des molécules modifiant l'indice de réfraction qui peuvent être introduits par diffusion dans le support (1) en polymère au moyen d'un échauffement local.

15. Mémoire de données selon la revendication 13 ou 14, **caractérisée en ce que** les atomes et/ou les molécules modifiant l'indice de réfraction sont des molécules pouvant être fortement polarisées. .

16. Mémoire de données selon la revendication 15, **caractérisée en ce que** les molécules pouvant être fortement polarisées sont des molécules contenant des halogènes.

17. Mémoire de données selon la revendication 15 ou 16, **caractérisée en ce que** les molécules pouvant être fortement polarisées sont des molécules aromatiques.

18. Mémoire de données selon la revendication 13 ou 14, **caractérisée en ce que** les atomes et/ou les molécules modifiant l'indice de réfraction sont des molécules pouvant être faiblement polarisées.

19. Mémoire de données selon l'une des revendications 14 à 18 en liaison avec la revendication 14, **caractérisée en ce qu'**une substance absorbante est associée à la couche (2), qui est disposée de manière à absorber au moins partiellement une radiation d'écriture et à céder localement, au moins partiellement, la chaleur ainsi produite à la couche (2) et/ou au support (1) en polymère.

20. Mémoire de données selon l'une des revendications 13 à 19, **caractérisée en ce que** le support d'information comporte plusieurs couches (10) de support en polymère au moyen desquelles des unités d'informations peuvent être lues dans une couche présélectionnée (10) de support en polymère et peuvent éventuellement être écrites dans une couche présélectionnée (10) de support en polymère.

21. Mémoire de données selon la revendication 20, **caractérisée en ce qu'**entre chacune des couches voisines (10) de support en polymère une couche adhésive (10) peut être disposée.

22. Mémoire de données selon la revendication 21, **caractérisée en ce que** l'indice de réfraction de la couche adhésive (12) s'écarte seulement de manière minime de l'indice de réfraction de la couche (10) de support en polymère.

23. Mémoire de données selon l'une des revendications 13 à 22, **caractérisée en ce que** le support en polymère comporte une feuille (11) de polymère.

24. Mémoire de données selon la revendication 23, **caractérisée en ce que** le support (11) d'informations est enroulé en spirale.

25. Mémoire de données selon la revendication 24, **caractérisée par** un support enroulé transparent optiquement qui présente dans la zone centrale un évidement.

26. Utilisation d'une mémoire selon la revendication 25 dans un mécanisme adapté à celle-ci, qui comporte un dispositif (S) de lecture et facultativement un dispositif (S) d'écriture, dans lequel le dispositif (S) de lecture et facultativement le dispositif (S) d'écriture sont disposés dans l'évideme dans la zone centrale du support enroulé et sont mis en mouvement par rapport à la mémoire (D) de données pour lire ou pour écrire des informations pendant que la mémoire (D) de données reste immobile.
